# EUROPÄISCHE PATENTSCHRIFT

(11) **EP 1 263 813 B1**
(45) Veröffentlichungstag und Bekanntmachung des Hinweises auf die Patenterteilung: **02.06.2004**
(21) Anmeldenummer: 01923637.1
(22) Anmeldetag: 06.03.2001
(51) Int. Cl.: C08F 26/06, C08F 2/22

(54) **VERFAHREN ZUR EINSTELLUNG DER TEILCHENGRÖSSE VON POPCORNPOLYMEREN WÄHREND DER POPCORNPOLYMERISATION**
METHOD FOR ADJUSTING THE PARTICLE SIZE OF POPCORN POLYMERS DURING POPCORN POLYMERIZATION
PROCEDE DE REGLAGE DE LA GRANULOMETRIE DE POLYMERES DE TYPE POPCORN DURANT LA POLYMERISATION DE TYPE POP-CORN ET UTILISATION DES POLYMERISATS DE TYPE POP-CORN

(30) Priorität: 10.03.2000 DE 10011137
(43) Veröffentlichungstag der Anmeldung: 11.12.2002
(73) Patentinhaber: BASF AKTIENGESELLSCHAFT, 67056 Ludwigshafen (DE)
(72) Erfinder: MEFFERT, Helmut, D-67065 Ludwigshafen (DE); BERTLEFF, Werner, 68519 Viernheim (DE); KERBER, Michael, 69469 Weinheim (DE); SPANG, Peter, 66386 St Ingbert (DE)
(86) Internationale Anmeldenummer: PCT/EP2001/002490
(87) Internationale Veröffentlichungsnummer: WO 2001/068727

(56) Entgegenhaltungen:
- EP-A- 0 175 335
- EP-A- 0 508 358
- US-A- 4 956 430

## Beschreibung

Die vorliegende Erfindung betrifft ein Verfahren zur Einstellung der Teilchengröße von Popcornpolymeren während der Popcornpolymerisation, wobei man Popcornpolymerisate bildende Reaktionsmischungen aus monoethylenisch ungesättigten Monomeren und Vernetzer unter Ausschluß von Sauerstoff und Polymerisationsinitiatoren bei Temperaturen bis zu 200°C polymerisiert.

Bekanntlich sind die Homopolymerisate des N-Vinylpyrrolidons im allgemeinen in Wasser und in zahlreichen organischen Lösungsmitteln leicht löslich. Ferner ist bekannt, daß man unlösliche, mehr oder minder quellbare Mischpolymerisate auf Basis von N-Vinylpyrrolidon herstellen kann, indem man mindestens bifunktionelle Vinyl- oder Acrylverbindungen, die als Vernetzer wirken, auf die übliche Art einpolymerisiert. Dabei ist es jedoch selbst bei Einsatz größerer Mengen an bifunktioneller Komponente nicht möglich, Polymerisate mit nur geringer Quellbarkeit und regulierbarer Korngröße in Wasser herzustellen. Polymerisate auf Basis von N-Vinylpyrrolidon mit geringer Quellbarkeit werden z.B. durch Popcorn-Polymerisation hergestellt, vgl. beispielsweise DE-A-2059484, DE-A-2255263 und US-A-3,277,066.

Aus der US-A-4 451 582 ist ein Verfahren zur Herstellung von unlöslichen, in Wasser nur wenig quellbaren, körnigen Polymerisaten aus basischen Vinylheterocyclen mit einem pKa-Wert von mehr als 4 und deren Copolymerisaten mit bis zu 30 Gew.-% copolymerisierbarer Monomerer bekannt, bei dem man die Monomeren in Gegenwart von 0,1 bis 10 Gew.-%, bezogen auf die Gesamtmonomermenge, eines Vernetzers unter Ausschluß von Sauerstoff und Polymerisationsinitiatoren polymerisiert. Die Polymerisate werden vorzugsweise durch Fällungspolymerisation in Wasser hergestellt. Sie können jedoch auch in Abwesenheit von Lösemitteln für die Monomeren durch Erhitzen der Monomeren auf Temperaturen von vorzugsweise 150 bis 180°C erhalten werden. Diese Reaktion ist allerdings schlecht kontrollierbar und ergibt nur geringe Raum-Zeit-Ausbeuten und relativ stark verunreinigte Produkte.

Es ist außerdem bekannt, unlösliche, nur wenig quellbare Polymerisate der Acrylsaure, durch Polymerisieren von Acrylsaure in wäßriger Lösung in Gegenwart von geringen Mengen an 2,2'-Azobisiso-butyronitril herzustellen, vgl. J.W. Breitenbach et al., Makromol. Chemie 177, (1976), 2787 bis 2792. Dabei entstehen jedoch Polymermischungen, die als Hauptbestandteil ein glasiges Polymer (Gel) und in untergeordneten Mengen Popcornpolymere der Acrylsaure enthalten. Die Trennung der Polymergemische ist in der Technik nicht mit vertretbarem Aufwand durchzuführen.

Aus Houben-Weyl, Band 14, Makrom. Stoffe, Teil 1, (1961), Seite 98 ist bekannt, daß aus Gemischen von Styrol mit Divinylbenzol Popcornpolymere gebildet werden. Popcornpolymere entstehen auch bei der technischen Butadien-Styrol-Polymerisation. Auch Acrylsäuremethylester neigt zur Bildung von Popcornpolymeren. Popcornpolymere haben die Eigenschaften, daß sie bei Kontakt mit den Monomeren, aus denen sie bestehen oder mit anderen Monomeren, diese in Popcornpolymerisate verwandeln können. Sie wirken sozusagen als Keim für die Polymerisation. Die Aktivität geht jedoch verloren, wenn sie mit Sauerstoff in Berührung kommen.

Aus Ullmanns Encyklopädie der Techn. Chemie, 4. Aufl. Band 19, 1980, Seite 385, ist bekannt, daß beim Erhitzen von N-Vinylpyrrolidon mit Hydroxiden und Alkoholaten der Alkali- und Erdalkali-Metalle in spontaner Reaktion ein unlösliches, in Wasser schwach quellbares Polymerisat gebildet wird. Solche als Popcornpolymerisate bezeichneten Stoffe entstehen auch beim Erhitzen von N-Vinylpyrrolidon mit Divinyl-Verbindungen unter Ausschluß von Sauerstoff und Polymerisationsinitiatoren. In Abwesenheit von Basen dauert es in der Regel mehrere Stunden, bevor die Popcorn-Polymerisation überhaupt beginnt.

Aus der EP-B-0 177 812 ist ein Verfahren zur Herstellung von unlöslichen, nur wenig quellbaren, pulverförmigen Polymerisaten auf Basis von monoethylenisch ungesättigten Carbonsäureamiden, Carbonsäuren und Carbonsäureestern bekannt, bei dem man zum Starten der Polymerisation ein aktives Popcornpolymerisat verwendet, das durch Erhitzen einer Mischung aus 99,6 bis 98,8 Gew.-% N-Vinylpyrrolidon-2 und 0,4 bis 1,2 Gew.-% einer mindestens zwei ethylenisch ungesättigte Doppelbindungen aufweisenden Verbindung als Vernetzer auf eine Temperatur in dem Bereich von 100 bis 150°C in Abwesenheit von Sauerstoff und Polymerisationinitiatoren erhältlich ist. Sobald das aktive Popcornpolymerisat gebildet ist, wird darin eine Mischung aus
a) 99,9 bis 90 Gew.-% mindestens einer Verbindung aus der Gruppe der N-Vinylcarbonsäureamide, Acrylamid, Methacrylamid, Acrylsaure, Methacrylsäure, Acrylsäureester, Methacrylsäureester und/oder Vinylester und
b) 0,1 bis 10 Gew.-%, bezogen auf die gesamten Monomeren, einer mindestens zwei ethylenisch ungesättigte, Doppelbindungen aufweisenden Verbindung als Vernetzer
in einem Pulverbett in Gegenwart eines Wärmeübertragungs-mittels, das gegenüber den Reaktionsteilnehmern inert ist, bei Temperaturen von 90 bis 220° C unter Aufrechterhaltung des Pulverzustands, Umwälzung der Reaktionsmasse und Verdampfen des Wärmeübertragungsmittels aus der Polymerisationszone unter Ausschluß von Sauerstoff und Polymerisationinitiatoren polymerisiert. Die so erhältlichen Popcornpolymerisate werden beispielsweise zur Absorption von Gerbstoffen aus Getränken, als Auflösungsbeschleuniger von pharmazeutischen Tabletten und als Ionenaustauscher verwendet. Carboxylgruppenhaltige Popcornpolymerisate werden z.B. durch Verseifung von Acrylester- und Acrylamideinheiten enthaltenden Popcornpolymerisaten erhalten.

Aus der WO-A-94/11408 sind unlösliche, nur wenig quellbare Polymerisate mit Aminogruppen bekannt. Diese Polymerisate werden hergestellt, indem man offenkettige N-Vinylcarbonsäureamide wie N-Vinylformamid und gegebenenfalls andere, damit copolymerisierbare Monomere mit 0,1 bis 10 Gew.-%, bezogen auf die bei der Polymerisation eingesetzten Monomeren, einer mindestens zwei ethylenisch ungesättigte Doppelbindungen aufweisenden Verbindung als Vernetzer unter Ausschluß von Sauerstoff und Polymerisationsinitiatoren zu Popcornpolymerisaten polymerisiert und aus mindestens 2 % der einpolymerisierten N-Vinylcarbonsäureamide die Formyl- bzw. Acylgruppe unter Bildung von Aminogruppen enthaltenden Popcornpolymeren durch Einwirkung von Enzymen, Basen oder Säuren abspaltet. Die Popcornpolymerisate werden als Ionenaustauscher oder als Adsorberharz für Metallionen verwendet.

Der Nachteil der genannten Verfahren zur Herstellung von Popcornpolymeren besteht darin, daß eine gegebenenfalls gewünschte Korngröße des Polymermaterials nur mehr oder weniger zufällig entsteht und nur umständlich durch mechanische Zerkleinerung oder durch Agglomeration auf die je nach Anwendungsgebiet erforderliche Korngröße angepaßt werden kann. Die Einstellung der Korngröße ist allerdings für viele Anwendungen essentiell.

Der vorliegenden Erfindung liegt die Aufgabe zugrunde, ein Verfahren zur Einstellung der Teilchengröße von Popcornpolymerisaten während der Popcornpolymerisation zur Verfügung zu stellen.

Die Aufgabe wird erfindungsgemäß gelöst mit einem Verfahren zur Einstellung der Teilchengröße von Popcornpolymeren während der Popcornpolymerisation, wobei man Popcornpolymerisate bildende Reaktionsmischungen aus monoethylenisch ungesättigten Monomeren und Vernetzer unter Ausschluß von Sauerstoff und Polymerisationsinitiatoren bei Temperaturen bis zu 200°C polymerisiert, wenn man die Popcornpolymerisation als Fällungspolymerisation in Wasser oder in Substanz durchführt und die Teilchengröße der Popcornpolymeren in dem Bereich von 1 µm bis 10 mm durch Einleiten eines Inertgasstroms in die Reaktionsmischung regelt. Hierfür benötigt man beispielsweise 0,01 bis 100, vorzugsweise 0,05 bis 30 und insbesondere 0,1 bis 20 Liter Inertgas pro Stunde und Liter Reaktionsmischung.

Zur Herstellung von Popcornpolymerisaten polymerisiert man beispielsweise
a) N-Vinyllactame der Formel 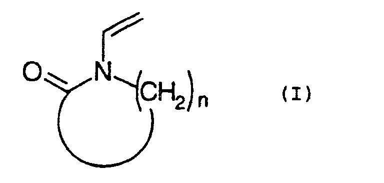 wobei n = 3-5 ist, und gegebenenfalls
b) andere, damit copolymerisierbare monoethylenisch ungesättigte Monomere
   in Gegenwart von
c) 0,1 bis 10 Gew.-%, bezogen auf die bei der Polymerisation eingesetzten Monomeren a) und b), einer mindestens zwei ethylenisch ungesättigte Doppelbindungen enthaltenden Verbindung als Vernetzer unter Ausschluß von Polymerisatinitiatoren und Sauerstoff zu Popcorn-Polymerisaten.

Geeignete Verbindungen der Formel I sind beispielsweise N-Vinylpyrrolidon, N-Vinylpiperidon und N-Vinylcaprolactam. Bei der Polymerisation kann man auch Mischungen der Monomeren der Gruppe (a) einsetzen, z.B. Mischungen aus N-Vinylpyrrolidon und N-Vinylcaprolactam.

Bei den Monomeren der Gruppe (b), die gegebenenfalls bei der Herstellung der Popcornpolymerisate mitverwendet wird, handelt es sich um andere, mit den Monomeren der Gruppen (a) und (c) copolymerisierbare monoethylenisch ungesättigte Verbindungen. Hierzu gehören beispielsweise Acrylamid, Methacrylamid, Acrylsäure, Methacrylsäure, Acrylsäureester, Methacrylsäureester und/oder Vinylester. Die Acrylsäure- und Methacrylsäureester leiten sich vorzugsweise von gesättigten, einwertigen Alkoholen mit 1 bis 4 Kohlenstoffatomen bzw. gesättigten zweiwertigen 2 bis 4 Kohlenstoffatome enthaltenden Alkoholen ab. Beispiele für diese Ester sind Acrylsäuremethylester, Methacrylsäuremethylester, Acrylsäureethylester, Methacrylsäureethylester, Acrylsäure-n-propylester, Methylacrylsäure-n-propylester, Acrylsäureisopropylester, Methylacrylsäureisopropylester und die Ester der Acrylsäure und Methacrylsäure, die sich von den isomeren Butanolen ableiten, sowie Hydroxyethylacrylat, Hydroxyethylmethacrylat, Hydroxypropylacrylat, Hydroxypropylmethacrylat, Hydroxybutylacrylat, Hydroxyisobutylacrylat und Hydroxyisobutylmethacrylat. Von den Vinylestern kommen vorzugsweise Vinylacetat und Vinylpropionat in Betracht. Weitere geeignete Monomere der Gruppe (b) sind Styrol, p-tert.-Butylstyrol, Acrylnitril, Methacrylnitril, N-Vinylformamid, N-Vinyl-N-Methylformamid, N-Vinylacetamid, N-Vinyl-N-methylacetamid, N-Vinyl-N-Ethylformamid, N-Vinyl-N-(n-propyl)formamid, N-Vinyl-N-isopropylformamid, N-Vinyl-N-isobutylformamid, N-Vinyl-N-methylpropionamid, N-Vinyl-n-buty-lacetamid und N-Vinyl-N-methylpropionamid, 1-Vinylimidazol, 2-Methyl-1-vinylimidazol und 4-Methyl-1-vinylimida-zol.

Die Monomeren der Gruppe (b) können allein oder auch in Mischung untereinander zusammen mit den Monomeren der Gruppen (a) und (c) polymerisiert werden. Die Popcornpolymerisation kann beispielsweise durch Erhitzen von N-Vinylpyrrolidon und geringen Mengen, z. B. 0,4 bis 1,2 Gew.-% eines Vernetzers wie N,N'-Divinylethylenharnstoff, in wäßrigem Medium in Gegenwart von Alkali gestartet werden. Zum Starten der Popcornpolymerisation verwendet man vorzugsweise frisch destilliertes N-Vinylpyrrolidon.

Die Popcornpolymerisation gelingt besonders leicht mit N-Vinylpyrrolidon in dem Temperaturbereich von etwa 60 bis 150°C in Abwesenheit von Sauerstoff und Polymerisationsinitiatoren.

Die Monomeren der Gruppe (b) sind, sofern sie bei der Herstellung der Popcorn Polymerisate mitverwendet werden, zu 0,1 bis 99,9 Gew.-% in der Monomermischung aus (a) und (b) vorhanden.

Als Monomere der Gruppe (c) werden bei der Polymerisation als Vernetzer Verbindungen eingesetzt, die mindestens zwei ethylenisch ungesättigte Doppelbindungen im Molekül enthalten. Besonders geeignet sind beispielsweise Alkylenbisacrylamide wie Methylenbisacrylamid und N,N'-Acryloylethylendiamin, N,N'-Divinylethylenharnstoff, N,N'-Divinylpropylenharnstoff, Ethylidenbis-3-(Nvinylpyrrolidon), N,N'-Divinyl-diimidazolyl(2,2')butan und 1,1'bis-(3,3'-vinylbenzimidazolyl-2-on)1,4-butan. Andere geeignete Vernetzer sind beispielsweise Alkylenglykoldi(meth)acrylate wie Ethylenglykoldiacrylat, Ethylenglykoldimethacrylat, Tetraet-hylenglykolacrylat, Tetraethylenglykoldimethacrylat, Diethylenglykolacrylat, Diethylenglykolmethacrylat, aromatische Divinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer. Die Vernetzer werden in Mengen von 0,1 bis 10, vorzugsweise 1 bis 4 Gew.-%, bezogen auf die bei der Polymerisation eingesetzten Monomeren (a) und (b) angewendet.

Die Popcornpolymerisation wird nach bekannten Verfahren durchgeführt, z. B. als Fällungspolymerisation oder durch Polymerisieren in Substanz. Bekannt ist beispielsweise eine Arbeitsweise, bei der man - wie in der EP-B-0 177 812 beschrieben - die Popcornpolymerisation dadurch startet, daß man eine Mischung aus 99,6 bis 98,8 Gew.-% N-Vinylpyrrolidon und 0,4 bis 1,2 Gew.-% einer mindestens zwei ethylenisch ungesättigte Doppelbindungen aufweisenden Verbindung als Vernetzer auf eine Temperatur in dem Bereich von 100 bis 150 °C in Abwesenheit von Sauerstoff und Polymerisationsinitiatoren erhitzt. Diese Polymerisation wird vorzugsweise durch Anwesenheit geringer Mengen an Natronlauge oder Kalilauge initiiert. Innerhalb einer kurzen Zeit bildet sich ein polymerisationsfähiges Popcornpolymerisat, das bei Zugabe geeigneter anderer Monomermischungen, d. h. der Monomeren der Gruppe (a) und gegebenenfalls (b) und weitere Zugabe der Monomeren (c) die Popcornpolymerisation dieser Monomeren ohne Induktionsperiode startet und vervollständigt, wobei man erfindungsgemäß zur Regelung der Teilchengröße der entstehenden Popcornpolymerisate einen Inertgasstrom vorzugsweise in die im Polymerisationsgefäß vorgelegten Monomeren bereits vor Beginn der Popcornpolymerisation leitet. Mit dem Einleiten des Inertgasstroms wird jedoch spätestens während der Induktionsperiode der Polymerisation begonnen, wobei der Inertgasstrom während der gesamten Dauer der Popcornpolymerisation durch die Reaktionsmischung geleitet wird.

Um die Popcornpolymerisation ohne Lösemittel, d.h. in Substanz, durchzuführen, wird das Monomergemisch aus (a) und (c) sowie gegebenenfalls (b) durch Einleiten von Stickstoff inertisiert und anschließend auf eine Temperatur in dem Bereich von 100 bis 200, vorzugsweise 150 bis 180°C erhitzt. Es ist vorteilhaft, auch während der Polymerisation weiter einen schwachen Stickstoffstrom durch die Monomeren zu leiten. Ausschluß von Sauerstoff wird auch dadurch erreicht, daß man den Ansatz bei einem Druck polymerisiert, der unter dem Atmosphärendruck liegt und bei dem die Monomeren sieden. Man kann jedoch die Popcornpolymerisation unter vermindertem Druck und gleichzeitigem Einleiten eines Inertgases durchführen. Je nach Art der eingesetzten Monomeren und der gewählten Temperatur polymerisiert die Mischung innerhalb von 1 bis 20 Stunden. Beispielsweise bilden sich bei der Polymerisation von N-Vinylcarbonsäureamiden mit 2 Gew.-% N,N'-Divinylethylenharnstoff bei 150°C unter Rühren mit einem kräftigen Rührwerk und einem Druck von 310mbar und Einleiten von Stickstoff nach 2,5 Stunden die ersten Polymerisatteilchen, deren Menge langsam zunimmt, bis nach 10 Stunden Polymerisationszeit das Reaktionsgemisch aus einem Pulver besteht. Das Popcornpolymerisat wird daraus in Ausbeuten von über 90% in Form eines Pulvers mit einer durchschnittlichen Teilchengröße von etwa 10µm bis 5mm, vorzugsweise mehr als 400µm bis 1000µm erhalten.

Zur Herstellung der Popcornpolymerisate wird jedoch die Fällungspolymerisation in Wasser bevorzugt. Die Konzentration der Monomeren wird dabei zweckmäßigerweise so gewählt, daß das Reaktionsgemisch über die gesamte Reaktionsdauer hinweg gut gerührt werden kann. Bei einer zu hohen Konzentration der Monomeren in Wasser, z. B. bei 95 Gew.-%, werden die Polymerisatkörner klebrig, so daß ein Rühren schwieriger wird als in verdünnterer wäßriger Lösung. Um die Reaktion in den üblichen Rührkesseln durchzuführen, wählt man beispielsweise Monomerkonzentrationen, bezogen auf die wäßrige Mischung, von etwa 5 bis 30, vorzugsweise 10 bis 20 Gew.-%. Falls kräftigere Rührwerke zur Verfügung stehen, kann die Monomerkonzentration der wäßrigen Lösung auch bis auf 50 Gew.-%, gegebenenfalls auch darüber erhöht werden. In einigen Fällen kann es zweckmäßig sein, die Popcornpolymerisation mit einer relativ konzentrierten Lösung zu beginnen und dann im Verlauf der Reaktion Wasser zur Verdünnung zuzusetzen.

Die Popcornpolymerisation wird bevorzugt bei pH-Werten oberhalb von 6 durchgeführt, um eine eventuell mögliche Hydrolyse der Monomeren zu vermeiden. Die Einstellung des pH-Wertes kann durch Zugabe geringer Mengen an Basen wie Natriumhydroxid oder Ammoniak oder der üblichen Puffersalze wie Soda, Natriumhydrogencarbonat oder Natriumphosphat erfolgen. Gegebenenfalls kann der Ausschluß von Sauerstoff dadurch erreicht werden, daß man das zu polymerisierende Gemisch zum Sieden erhitzt und zusätzlich einen Inertgasstrom zur Regelung der Teilchengröße der Popcornpolymerisate durch das Reaktionsgemisch leitet.

Die Teilchengröße der Popcornpolymerisate wird dabei durch die Menge des Inertgasstromes geregelt, der durch die Polymerisationslösung geleitet wird. Wird dem Reaktionsansatz wenig Inertgas zugeführt, so entstehen in der Regel grobe Popcornpolymerisate, wird die Polymerisationslösung mit viel Inertgas durchströmt, so entstehen feinere Popcorn-polymerisate. In Abhängigkkeit von verschiedenen Rahmenbedingungen wie z.B. Kesselgröße, Temperatur und Druck, können für den jeweiligen Einzelfall keine exakten Bedingungen für die Einstellung einer bestimmten Teilchengröße für die Popcornpolymmerisate angegeben werden. Die für den Einzelfall richtige Menge an Inertgas, die durch die Reaktionsmischung geleitet werden muß, kann durch wenige einfache Versuche leicht ermittelt werden. Wie oben bereits angegeben, liegen die durch die Reaktionsmischung zu leitenden Mengen an Inertgas in dem Bereich von 0,01 bis 100, vorzugsweise 0,05 bis 30 1 Inertgas/1 Reaktionsgemisch . h.

Als Inertgas können Edelgase wie Helium, Neon oder Argon verwendet werden. Auch Kohlendioxid ist geeignet. Vorzugsweise wird Stickstoff verwendet.

In einigen Fällen kann es auch vorteilhaft sein, dem Reaktionsgemisch zur völligen Entfernung von gelöstem Sauerstoff geringe Mengen - z.B. 0,1 bis 1 Gew.-%, bezogen auf die Monomermischung - eines Reduktionsmittels wie Natriumsulfit, Natriumpyrosulfit, Natriumdithionit, Ascorbinsäure oder Mischungen der Reduktionsmittel, zuzusetzen.

Die Polymerisationstemperatur kann in einem weiten Bereich variiert werden, z. B. von etwa 20 bis 200, vorzugsweise 50 bis 150°C.

Bei einer besonders bevorzugten Ausführungsform der Fällungspolymerisation wird ein wasserlösliches Comonomer, ein Teil des Vernetzers, Wasser und gegebenenfalls ein Puffer und ein Reduktionsmittel in einem Inertgasstrom erhitzt, bis sich die ersten Polymerisatteilchen zeigen. Dann wird - wenn gewünscht - eine vorher durch Einblasen von Stickstoff inertisierte Mischung aus einem oder mehreren der oben genannten Comonomeren und dem restlichen Vernetzer und gegebenenfalls Wasser als Verdünnungsmittel innerhalb von 0,2 bis 5 Stunden zugegeben. Diese Arbeitsweise hat den Vorteil, daß die Popcornpolymerisation nur kurze Zeit in Anspruch nimmt.

Die Popcornpolymerisate können aus der wäßrigen Lösung isoliert, gereinigt und anschließend - sofern die einpolymerisierten Monomeren hydrolysierbare Gruppen enthalten, z.B. Monomere wie Vinylformamid oder Methacrylsäuremethylester - hydrolysiert werden. Es ist jedoch auch möglich, die wäßrige Suspension der Popcornpolymerisate direkt zu hydrolysieren.

Die Popcornpolymerisate fallen üblicherweise mit einer Ausbeute von etwa 90 bis > 99% der theoretischen Ausbeute an. Sie können aus der wäßrigen Suspension durch Filtrieren oder Zentrifugieren mit anschließendem Auswaschen mit Wasser und Trocknen in üblichen Trocknern wie Umluft- oder Vakuumtrockenschrank, Schaufeltrockner, Taumeltrockner, Wirbelschichttrockner oder Stromtrockner isoliert werden. Die Popcornpolymerisate sind in Wasser und allen Lösemitteln praktisch nicht löslich und quellen darin auch nur geringfügig. Der mittlere Teilchendurchmesser der getrockneten Popcornpolymerisate liegt üblicherweise in dem Bereich von 1 µm bis 10 mm. Zur Herstellung von Popcornpolymerisaten werden als Popcornpolymerisate bildende Monomere bevorzugt N-Vinylpyrrolidon, N-Vinylpiperidon, N-Vinylcaprolactam oder deren Mischungen eingesetzt. Der bevorzugt eingesetzte Vernetzer ist N,N'-Divinylethylenharnstoff.

Popcornpolymerisate mit einem mittleren Teilchendurchmesser von >400 µm bis 1500 µm werden beispielsweise als Getränkeklärungsmittel, Antidiarrhoikum und als Zerfallsbeschleuniger für Tabletten verwendet: Von besonderem Interesse ist die Verwendung von Popcornpolymerisaten mit einem mittleren Teilchendurchmesser von 420 µm bis 1 000 µm in einer Menge von 0,5 bis 20 Gew.-% in Wasch- und Reinigungsmitteltabletten zur Erhöhung der Zerfallsgeschwindigkeit der Tabletten beim Zusammenbringen mit Wasser.

Die Prozentangaben in den Beispielen bedeuten Gewichtsprozent. Die Korngrößenverteilung der Popcornpolymerisate wurde durch Siebanalyse bestimmt.

### Beispiele

### Vergleichsbeispiel 1

In einer Rührapparatur wurden 1375 g destilliertes Wasser, 115 g N-Vinylpyrrolidon, 2,6 g N,N'-Divinylethylen-harnstoff und 0,05 g Natriumhydroxid vorgelegt und unter Rühren mit 60 UpM unter einem Stickstoffstrom der jedoch nicht durch die Reaktionsmischung sondern nur darüber geleitet wurde, auf 60°C erhitzt. Sobald diese Temperatur erreicht war, setzte man 130 mg Natriumdithionit zu. Die Mischung wurde auf 60°C gehalten. Die Popcornpolymerisation erfolgte sehr langsam und war nach ca. 24 Stunden beendet. Die viskose Suspension wurde abfiltriert und mit Wasser gewaschen (ca. 2000 ml), um Verunreinigungen wie lösliches Polymer und nicht polymerisierte Monomere zu entfernen. Die Ausbeute an Popcorn-polymerisat betrug 100%.

### Siebanalyse:

| Korngröße [µm] | Anteil [%] |
|---|---|
| > 500 | 97,6 |
| 250-500 | 2,4 |
| < 250 | 0 |

Das Vergleichsbeispiel wurde zweimal wiederholt. Man bestimmte jeweils die Korngrößenverteilung der erhaltenen Popcornpolymerisate. Die Ergebnisse sind in der folgenden Tabelle angegeben:

| Vergleichsbeispiel | 2 | 3 |
|---|---|---|
| Korngröße [µm] | Anteil [%] | [%] |
| > 500 | 80,5 | 71,2 |
| 250-500 | 14,9 | 19,5 |
| < 250 | 4,6 | 9,3 |

Die Vergleichsbeispiele zeigen, daß die Teilchengröße der Popcornpolymerisate nach dem Stand der Technik nicht reproduzierbar war.

### Beispiel 1a

In einer Rührapparatur wurden 1375 g destilliertes Wasser, 115 g N-Vinylpyrrolidon, 2,6 g N,N'-Divinylethylen-harnstoff und 0,05 g Natriumhydroxid vorgelegt und unter Rühren mit einer Drehzahl von 60 UpM auf 60°C erhitzt. Die Lösung wurde schon während der Aufheizperiode bis zum Abschluß der Polymerisation mit Stickstoff durchströmt, der mit Hilfe eines Rohres, das bis zum Boden der Rührapparatur reichte, in die Reaktionsmischung eingeführt wurde. Die Strömungsgeschwindigkeit betrug 6 l/h. Nachdem die Temperatur der Reaktionsmischung 60°C erreicht hatte, wurden 130 mg Natriumdithionit zugesetzt. Die Mischung wurde auf 60°C gehalten. Die Popcornpolymerisation begann nach ca. 20 Minuten und war nach 5 Stunden beendet. Die viskose Suspension wurde anschließend abfiltriert und mit Wasser gewaschen (ca. 2000 ml), um Verunreinigungen wie lösliches Polymer und restliche Monomere zu entfernen. Die Ausbeute an Popcornpolymerisat betrug 97%.

### Beispiel 1b

Das Beispiel 1a wurde genau wiederholt. Man bestimmte die Teilchengrößenverteilung. Sie ist in der folgenden Tabelle angegeben. Wie daraus ersichtlich ist, weist die Teilchengrößenverteilung der Popcornpolymerisate gegenüber dem Beispiel 1a nur eine geringfügige Abweichung auf. Die Ergebnisse sind gegenüber den Verfahren des Standes der Technik reproduzierbar.

### Siebanalyse:

| Beispiel 1 | a) | b) |
|---|---|---|
| Korngröße [µm] | Anteil [%] | Anteil [%] |
| > 500 | 72,0 | 74,3 |
| 250-500 | 13,6 | 15,5 |
| < 250 | 14,4 | 10,2 |

### Beispiel 2

In einer Rührapparatur wurden 1375 g destilliertes Wasser, 115 g N-Vinylpyrrolidon, 2,6 g N,N'-Divinylethylen-harnstoff und 0,05 g Natriumhydroxid vorgelegt und unter Rühren mit einer Drehzahl von 60 UpM auf 60°C erhitzt. Die Lösung wurde während des Erhitzens bis zum Ende der Reaktion mit Stickstoff durchströmt, der von unten in die Reaktionsmischung geleitet wurde. Die Strömungsgeschwindigkeit betrug 18 l/h. Nachdem das Reaktionsgemisch eine Temperatur von 60°C erreicht hatte, setzte man 26 mg Natriumdithionit zu. Die Mischung wurde auf 60°C gehalten. Die Popcornpolymerisation begann nach ca. 20 Minuten und war nach 5,5 Stunden beendet. Die viskose Suspension wurde abfiltriert und mit Wasser gewaschen (ca. 2000 ml), um Verunreinigungen wie lösliches Polymer und restliche Monomere zu entfernen. Die Ausbeute an Popcorn-Polymerisat betrug 100%.

### Siebanalyse:

| Korngröße [µm] | Anteil [%] |
|---|---|
| > 500 | 79,1 |
| 250-500 | 15,3 |
| < 250 | 5,6 |

### Beispiel 3

In einer Rührapparatur wurden 1375 g destilliertes Wasser, 115 g N-Vinylpyrrolidon, 2,6 g N,N'-Divinylethylen-harnstoff und 0,05 g Natriumhydroxid vorgelegt und unter Rühren mit einer Drehzahl von 60 UpM auf 60°C erhitzt. Die Lösung wurde während des Erhitzens und der Polymerisation mit Stickstoff durchströmt. Der Stickstoff wurde mit Hilfe eines Rohres, das bis auf den Boden der Rührapparatur reichte, in die Reaktionsmischung geleitet. Die Strömungsgeschwindigkeit betrug 6 l/h. Nachdem das Reaktionsgemisch eine Temperatur von 60°C erreicht hatte, setzte man 26 mg Natriumdithionit zu. Die Mischung wurde auf 60°C gehalten und fortlaufend gerührt. Die Popcornpolymerisation begann nach ca. 20 Minuten und war nach ca. 6 Stunden beendet. Die viskose Suspension wurde abfiltriert und mit Wasser gewaschen (ca. 2000 ml), um Verunreinigungen wie lösliches Polymer und restliche Monomere zu entfernen. Die Ausbeute an Popcorn-Polymerisat betrug 99%.

### Siebanalyse:

| Korngröße [µm] | Anteil [%] |
|---|---|
| > 500 | 94,8 |
| 250-500 | 13,0 |
| < 250 | 9,2 |

### Beispiel 4

In einer Rührapparatur wurden 1375 g destilliertes Wasser, 115 g N-Vinylpyrrolidon, 2,6 g N,N'-Divinylethylen-harnstoff und 0,05 g Natriumhydroxid vorgelegt und unter Rühren mit einer Drehzahl von 60 UpM auf 60°C erhitzt. Die Lösung wurde bei Beginn des Erhitzens bis zum Ende der Polymerisation mit Stickstoff durchströmt. Der Stickstoff wurde mit Hilfe eines Rohres, das am Boden der Rührapparatur endete, in die Reaktionsmischung geleitet. Die Strömungsgeschwindigkeit des Stickstoffs betrug 18 l/h. Nachdem die Temperatur des Reaktionsgemisches 60 °C erreicht hatte, gab man 260 mg Natriumdithionit zu. Die Mischung wurde auf 60°C gehalten und fortlaufend gerührt. Die Popcornpolymerisation begann nach ca. 20 Minuten und war nach ca. 5 Stunden abgeschlossen. Die viskose Suspension wurde abfiltriert und mit Wasser gewaschen (ca. 2000 ml), um Verunreinigungen wie lösliches Polymer und resliche Monomere zu entfernen. Die Ausbeute an Popcorn-polymerisat betrug 98%.

### Siebanalyse:

| Korngröße [µm] | Anteil [%] |
|---|---|
| > 500 | 0 |
| 250-500 | 23,3 |
| < 250 | 76,7 |

### Beispiel 5

In einer Rührapparatur wurden 1375 g destilliertes Wasser, 115 g N-Vinylpyrrolidon, 2,6 g N,N'-Divinylethylen-harnstoff und 0,05 g Natriumhydroxid vorgelegt und unter Rühren mit einer Drehzahl von 60 UpM auf 60°C erhitzt. Die Lösung wurde mit Stickstoff durchströmt, der am Boden der Rührapparatur in die Reaktionsmischung geleitet wurde. Die Strömungsgeschwindigkeit betrug 6 l/h. Nachdem die Temperatur des Reaktionsgemisches 60°C erreicht hatte, setzte man 260 mg Natriumdithionit zu. Die Mischung wurde auf 60°C gehalten und fortlaufend gerührt. Die Popcornpolymerisation begann nach ca. 20 Minuten und war nach ca. 7 Stunden beendet. Die viskose Suspension wurde abfiltriert und mit Wasser gewaschen (ca. 2000 ml), um Verunreinigungen wie lösliches Polymer und restliche Monomere zu entfernen. Die Ausbeute an Popcornpolymerisat betrug 93%.

### Siebanalyse:

| Korngröße [µm] | Anteil [%] |
|---|---|
| > 500 | 82,6 |
| 250-500 | 16,3 |
| < 250 | 10,4 |

### Beispiel 6

In einem Rührkessel wurden 1375 kg destilliertes Wasser, 115 kg N-Vinylpyrrolidon, 2,6 kg N,N'-Divinylethylen-harnstoff und 1 kg 5%-ige Natronlauge vorgelegt und unter Rühren mit einer Drehzahl von 60 UpM auf 75°C erhitzt, wobei die Lösung während des Erhitzens und der Polymerisation mit Stickstoff durchströmt wurde, der am Boden des Polymerisationsgefäßes in die Reaktionsmischung geleitet wurde. Die Strömungsgeschwindigkeit betrug 350 l/h. Nachdem die Temperatur des Reaktionsgemisches auf 75°C angestiegen war, gab man 26 g Natriumdithionit - gelöst in 30 ml Wasser - zu. Die Mischung wurde auf 75°C gehalten und fortwährend gerührt. Die Popcornpolymerisation begann nach ca. 20 Minuten und war nach 6 Stunden beendet. Die viskose Suspension wurde nun abfiltriert und mit Wasser gewaschen, um Verunreinigungen wie lösliches Polymer und nicht polymerisierte Monomere zu entfernen. Die Ausbeute an Popcorn-Polymerisat betrug 94%.

**Tabelle 1**

| | | | Siebanalyse | | |
|---|---|---|---|---|---|
| Beispiel | Na-dithionit [mg] | N₂ [1/h] | >500 [µm] | 250-500 [µm] | <250 [µm] |
| 1 | 130 | 6 | 72,0 | 13,6 | 14,4 |
| 2 | 26 | 18 | 79,1 | 15,3 | 5,6 |
| 3 | 26 | 6 | 94,8 | 13,0 | 9,2 |
| 4 | 260 | 18 | 0 | 23,3 | 76,7 |
| 5 | 260 | 6 | 82,5 | 16,3 | 10,4 |
| 6 | 26 g | 350 | 88,2 | 10,2 | 1,6 |

Wie die Beispiele 1 bis 6 zeigen, erhält man gegenüber der Arbeitsweise von Vergleichsbeispiel 1 (kein Stickstoff in Reaktionsmischung geleitet) erfindungsgemäß eine unerwartete Steigerung der Polymerisationsgeschwindigkeit.

Um die Wirkungsweise von Popcornpolymerisaten als Zerfallsbeschleuniger für Waschmitteltabletten zu zeigen, wurden aus der unten angegebenen Waschmittelformulierung A und den in Tabelle 2 genannten Popcornpolymeren Waschmitteltabletten mit einem Gewicht von ca. 4 g und einem Durchmesser von 2,5 cm hergestellt. Die Tablettierung erfolgte in einer Exzenterpresse (Fa. Korsch, Typ EK 0 DMS). Die Mischungen enthielten die in der Tabelle angegebenen Mengen an Popcornpolymerisat als Sprengmittel, das dem pulverförmigen granulierten Waschmittel beigemischt wurde.

Zur Bestimmung der Löslichkeit wurde ein Zerfallzeit-Testgerät der Fa. Erweka benutzt. Dazu wurden die Tabletten in einem Zerfalltestkorb mit Siebboden in einem temperierten Wasserbad bewegt (30 Auf- und Abwärts-Bewegungen pro Minute mit einer Hubhöhe von 20 mm). Man bestimmte die Zeit, nach der sich kein Rückstand mehr auf dem Siebboden befand. Die Ergebnisse sind in der Tabelle angegeben.

| Waschmittel der Zusammensetzung A (alle Angaben in Gew.-%) | |
|---|---|
| Alkylbenzolsulfonat | 8 |
| Kalikokosseife | 1,2 |
| Nichtionisches Tensid | 6 (1 Mol C_{13/}C₁₅-Fettalkohol, umgesetzt mit 7 Mol Ethylenoxid) |
| Zeolith A | 35 |
| Natriumcarbonat | 8 |
| Natriummetasilikat x 5,5 H₂O | 6 |
| Natriumcitrat | 4 |
| Natriumpercarbonat | 18 |
| Tetraacetylethylendiamin (TAED) | 5 |
| Komplexbildner | 0,3 (Ethylendiamintetramethylenphosphonat) |
| Copolymer Acrylsäure/ Maleinsäure 70:30, Molmasse 70000 | 4 |
| Natriumsulfat | 3 |
| Übrige Bestandteile | 2,5 (Duftstoffe, Schaumdämpfer, Enzyme, opt. Aufheller) |
| Schüttdichte ca. 770 g/l | |
| Teilchengröße ca. 700-1000 µm | |

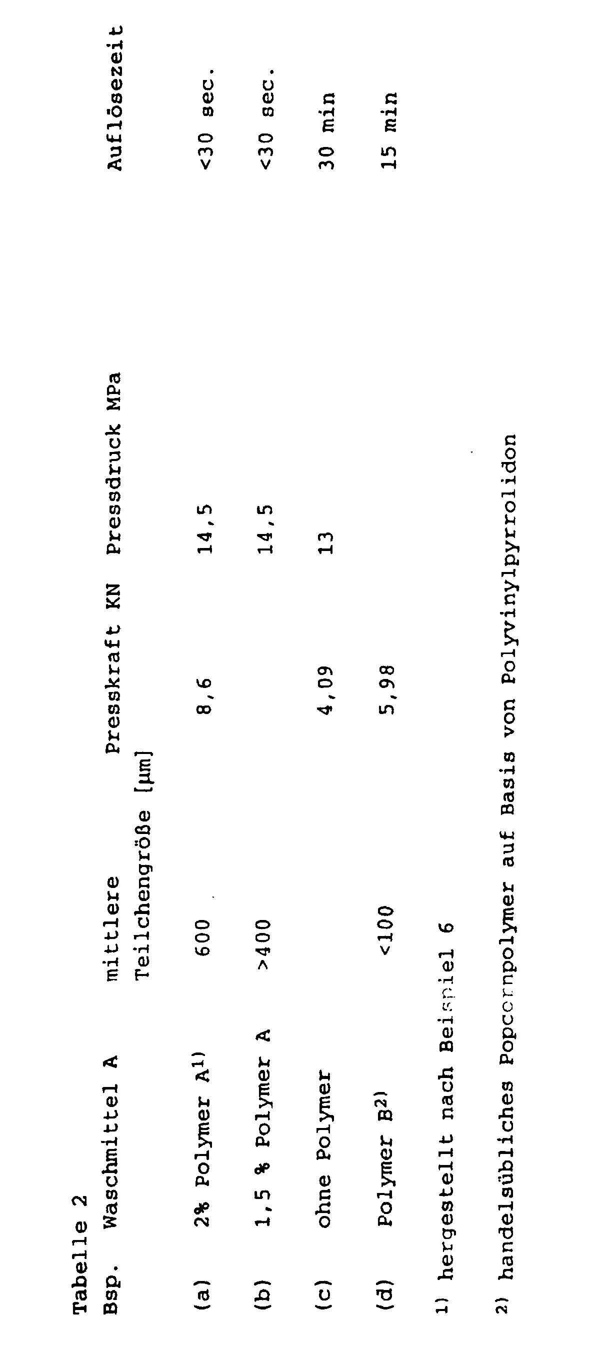

## Patentansprüche

1. Verfahren zur Einstellung der Teilchengröße von Popcornpolymeren während der Popcornpolymerisation, wobei man Popcornpolymerisate bildende Reaktionsmischungen aus monoethylenisch ungesättigten Monomeren und Vernetzer unter Ausschluß von Sauerstoff und Polymerisationsinitiatoren bei Temperaturen bis zu 200°C polymerisiert, **dadurch gekennzeichnet, daß** man die Popcornpolymerisation als Fällungspolymerisation in Wasser oder in Substanz durchführt und die Teilchengröße der Popcornpolymeren in dem Bereich von 1 µm bis 10 mm durch Einleiten eines Inertgasstroms in die Reaktionsmischung regelt.

2. Verfahren nach Anspruch 1, **dadurch gekennzeichnet, daß** man 0,01 bis 100 1 Inertgas pro Stunde und 1 Reaktionsmischung in die Reaktionsmischung einleitet.

3. Verfahren nach Anspruch 1 oder 2, **dadurch gekennzeichnet, daß** man die Popcornpolymerisation in Gegenwart eines Reduktionsmittels durchführt.

4. Verfahren nach Anspruch 3, **dadurch gekennzeichnet, daß** man mit dem Einleiten des Inertgases in die Reaktionsmischung vor der Zugabe des Reduktionsmittels beginnt.

5. verfahren nach einem der Ansprüche 1 bis 4, **dadurch gekennzeichnet, daß** man als Inertgas Stickstoff verwendet.

6. Verfahren nach einem der Ansprüche 1 bis 5, **dadurch gekennzeichnet, daß** man als Popcornpolymerisate bildende monoethylenisch ungesättigte Monomere N-Vinyllactame einsetzt.

7. Verfahren nach einem der Ansprüche 1 bis 6, **dadurch gekennzeichnet, daß** man als Popcornpolymerisate bildende Monomere N-Vinylpyrrolidon, N-Vinylpiperidon, N-Vinylcaprolactam oder deren Mischungen einsetzt.

8. Verfahren nach einem der Ansprüche 1 bis 7, **dadurch gekennzeichet, daß** man als Vernetzer N,N'-Divinylethylenharnstoff einsetzt.

9. Verwendung der nach den Ansprüchen 1 bis 8 erhältlichen Popcornpolymerisate mit einem mittleren Teilchendurchmesser von >400 µm bis 1 500 µm als Getränkeklärungsmittel, Antidiarrhoikum und als Zerfallsbeschleuniger für Tabletten.

10. Verwendung nach Anspruch 9, **dadurch gekennzeichnet, daß** man Popcornpolymerisate mit einem mittleren Teilchendurchmesser von 420 µm bis 1 000 µm in einer Menge von 0,5 bis 20 Gew.-% in Waschmitteltabletten zur Erhöhung der Zerfallsgeschwindigkeit der Tabletten beim Zusammenbringen mit Wasser einsetzt.

## Claims

1. A process for establishing the particle size of popcorn polymers during the popcorn polymerization, reaction mixtures forming popcorn polymers and comprising monoethylenically unsaturated monomers and a crosslinking agent being polymerized in the absence of oxygen and polymerization initiators at up to 200°C, wherein the popcorn polymerization is carried out as a precipitation polymerization in water or in the absence of a solvent and the particle size of the popcorn polymers is controlled in the range from 1 µm to 10 mm by passing an inert gas stream into the reaction mixture.

2. A process as claimed in claim 1, wherein from 0.01 to 100 1 of inert gas per hour per 1 of reaction mixture are passed into the reaction mixture.

3. A process as claimed in claim 1 or 2, wherein the popcorn polymerization is carried out in the presence of a reducing agent.

4. A process as claimed in claim 3, wherein the passage of the inert gas into the reaction mixture is started before the addition of the reducing agent.

5. The process as claimed in any of claims 1 to 4, wherein the inert gas used is nitrogen.

6. The process as claimed in any of claims 1 to 5, wherein N-vinyllactams are used as the monoethylenically unsaturated monomers forming popcorn polymers.

7. The process as claimed in any of claims 1 to 6, wherein N-vinylpyrrolidone, N-vinylpiperidone, N-vinylcaprolactam or mixtures thereof are used as monomers forming popcorn polymers.

8. A process as claimed in any of claims 1 to 7, wherein the crosslinking agent used is N,N'-divinylethyleneurea.

9. The use of a popcorn polymer obtainable as claimed in any of claims 1 to 8 and having a mean particle diameter of from >400 µm to 1500 µm as beverage clarifiers, antidiarrheal drugs and disintegration accelerators for tablets.

10. The use as claimed in claim 9, wherein popcorn polymers having a mean particle diameter of from 420 µm to 1000 µm are used in an amount of from 0.5 to 20% by weight in detergent tablets for increasing the disintegration rate of the tablets on combination with water.

## Revendications

1. Procédé d'ajustement de la granulométrie de polymères de type popcorn durant la polymérisation de type popcorn, dans lequel on polymérise des mélanges réactionnels, formant des polymères de type popcorn, composés de monomères à insaturation monoéthylénique et d'agents réticulants à l'exclusion de l'oxygène et d'amorceurs de polymérisation à des températures allant jusqu'à 200°C, **caractérisé en ce que** l'on réalise la polymérisation de type popcorn sous forme de polymérisation par précipitation dans de l'eau ou en masse, et **en ce que** l'on ajuste la granulométrie des polymères de type popcorn dans la gamme allant de 1 µm à 10 mm en introduisant un courant de gaz inerte dans le mélange réactionnel.

2. Procédé selon la revendication 1, **caractérisé en ce que** l'on introduit 0,01 L à 100°L de gaz inerte par heure et par litre de mélange réactionnel dans le mélange réactionnel.

3. Procédé selon la revendication 1 ou 2, **caractérisé en ce que** l'on réalise la polymérisation de type popcorn en présence d'un agent de réduction.

4. Procédé selon la revendication 3, **caractérisé en ce que** l'on commence l'introduction du gaz inerte dans le mélange réactionnel avant l'addition de l'agent de réduction.

5. Procédé selon l'une quelconque des revendications 1 à 4, **caractérisé en ce que** l'on met en oeuvre, en tant que gaz inerte, l'azote.

6. Procédé selon l'une quelconque des revendications 1 à 5, **caractérisé en ce que** l'on met en oeuvre, en tant que monomères à insaturation monoéthylénique formant des polymères de type popcorn, des N-vinyllactames.

7. Procédé selon l'une quelconque des revendications 1 à 6, **caractérisé en ce que** l'on met en oeuvre, en tant que monomères formant des polymères de type popcorn, la N-vinylpyrrolidone, la N-vinylpipéridone, la N-vinylcaprolactame ou leurs mélanges.

8. Procédé selon l'une quelconque des revendications 1 à 7, **caractérisé en ce que** l'on met en oeuvre, en tant qu'agent réticulant, la N,N'-divinyléthylène-urée.

9. Utilisation des polymères de type popcorn pouvant être obtenus selon l'une quelconque des revendications 1 à 8, présentant un diamètre moyen de particules allant de plus de 400 µm à 1 500 µm, en tant qu'agents de clarification de boissons, en tant qu'antidiarrhéiques et en tant qu'agents de délitement pour comprimés.

10. Utilisation selon la revendication 9, **caractérisé en ce que** l'on met en oeuvre des polymères de type popcorn présentant un diamètre moyen de particules allant de 420 µm à 1 000 µm à raison de 0,5% en poids à 20% en poids dans des comprimés de détergents afin d'augmenter la vitesse de délitement des comprimés au contact avec l'eau.
